# EUROPÄISCHE PATENTSCHRIFT

(11) **EP 2 522 978 B1**
(45) Veröffentlichungstag und Bekanntmachung des Hinweises auf die Patenterteilung: **12.02.2020**
(21) Anmeldenummer: 12163277.2
(22) Anmeldetag: 05.04.2012
(51) Int. Cl.: G01M 15/05, G01M 15/04

(54) **Prüfstand für dynamische Prüfaufgaben an Verbrennungskraftmaschinen, sowie Verfahren zum Betreiben eines derartigen Prüfstandes**
Test stand for dynamic tests for combustion engines and method for operating such a test stand
Banc d'essai pour le contrôle dynamique de moteurs à combustion interne, ainsi que procédé de fonctionnement d'un tel banc d'essai

(30) Priorität: 09.05.2011 AT 6442011
(43) Veröffentlichungstag der Anmeldung: 14.11.2012
(73) Patentinhaber: AVL List GmbH, 8020 Graz (AT)
(72) Erfinder: Grünbacher, Engelbert, 4840 Vöcklabruck (AT); Kokal, Helmut, 8010 Graz (AT); Schmidt, Martin, 63225 Langen (DE); Del Re, Luigi, 4040 Linz (AT); Paulweber, Michael, 8071 Hausmannstätten (AT)
(74) Vertreter: Patentanwälte Pinter & Weiss OG

(56) Entgegenhaltungen:
- WO-A1-2010/004870
- DE-A1- 10 247 347
- DE-A1- 10 247 349
- DE-A1-102005 035 408
- GE HUAMIN ET AL: "Design of a multivariable controller for an engine eddy dynamometer system", COMPUTER, MECHATRONICS, CONTROL AND ELECTRONIC ENGINEERING (CMCE), 2010 INTERNATIONAL CONFERENCE ON, IEEE, PISCATAWAY, NJ, USA, 24. August 2010 (2010-08-24), Seiten 476-479, XP031781176, ISBN: 978-1-4244-7957-3

## Beschreibung

Die Erfindung betrifft einen Prüfstand für dynamische Prüfaufgaben an Verbrennungskraftmaschinen, mit einer vorzugsweise elektrischen Antriebs- und/oder Belastungseinrichtung, die mit einer Regeleinrichtung für die Anpassung und Regelung von Vorgabewerten für eine Drehzahl und einen Drehmomentverlauf gekoppelt ist, sowie ein Verfahren zum Betreiben eines Prüfstandes mit zumindest einer Antriebs- und/oder Belastungseinheit für dynamische Prüfaufgaben an Verbrennungskraftmaschinen, bei welchem Vorgabewerte für den Verlauf zumindest zweier Größen der Verbrennungsmaschine, vorzugsweise einer Drehzahl und eines Drehmoments, über eine Antriebs- und/oder Belastungseinheit eingeregelt werden.

Eine hochdynamische und moderne Regeleinrichtung eines dynamischen Motorenprüfstandes erlaubt, dass einem beliebig vorgegebenen Verlauf von Drehzahl und Drehmoment nahezu perfekt gefolgt werden kann (DE 102 47 347 A1). Dies ist aber immer nur dann möglich, wenn die Stellleistung der Antriebsmaschinen, d.h., der Brennkraftmaschine und der Leistungsbremse ausreichend ist. Diese ist aber jeweils begrenzt, was zu einer Eingrenzung der möglichen Verläufe führt. Da am Prüfstand zwei Antriebsmaschinen vorhanden sind, können zwei Ausgangsgrößen geregelt werden. Im der Regel sind das eine Drehzahl und ein Drehmoment. Bei der Drehzahl kann es sich um die Drehzahl der Leistungsbremse oder um die Drehzahl der Brennkraftmaschine handeln. Beim Moment ist entweder das Moment der Brennkraftmaschine, welches an der Kurbelwelle abgegeben wird, oder das Wellenmoment bzw. Belastungsmoment gemeint. Werden nun Verläufe dieser Größen vorgegeben, welche auf Grund der begrenzten Stellleistung nicht mehr eingeregelt werden können, dann müssen diese Verläufe so abgeändert werden, dass diese wiederum am Prüfstand realisiert werden können.

Durch Stellgrößenbegrenzung beim Prüfstand kann es bei der Feedbackregelung zu einem "Wind Up" Effekt kommen. Dieser Effekt lässt sich durch ein überhöhtes Überschwingen oder auch durch eine hohe Schwingneigung des geschlossenen Regelkreises erkennen und er führt zu einem Verlust der Reglerperformance. Aus diesem Grund werden Anti-Wind- Up Strukturen eingeführt welche diesen "Wind Up" Effekt unterbinden sollen. Diese Reglerergänzungen sind schon seit langem im Einsatz.

Die Aufgabe der vorliegenden Erfindung waren daher in Prüfstand sowie ein Verfahren zu dessen Betrieb, bei welchen eine für die jeweilige Prüfaufgabe optimierte Anpassung und Regelung der durch eine Drehzahl und einen Drehmomentverlauf bestimmten Vorgabewerte möglich ist, sodass diese am Prüfstand bestmöglich dargestellt werden.

Zur Lösung dieser Aufgabe ist der Prüfstand erfindungsgemäß dadurch gekennzeichnet, dass die Regeleinrichtung im Sinn einer Verstellung der Gewichtung von drehzahlgeführter Regelung auf drehmomentgeführter Regelung anpassbar ist.

Vorteilhafterweise ist dazu die Regeleinrichtung mit einem Bedienelement zur Verstellung der Gewichtung verbunden.

Gemäß einer bevorzugten Ausführungsform ist vorgesehen, dass das Bedienelement über eine graphische Benutzeroberfläche realisiert ist.

Eine weitere Ausführungsform der Erfindung sieht vor, dass die Regeleinrichtung im Sinn einer stufenlosen Verstellung der Gewichtung anpassbar ist.

Zur Lösung der eingangs gestellten Aufgabe ist das Verfahren dadurch gekennzeichnet, dass die Regeleinrichtung die verfügbare Stellleistung entsprechend einer vorgebbaren und veränderbaren Gewichtung auf die Verbrennungskraftmaschine und die Antriebs- und/oder Belastungseinheit aufteilt.

Vorteilhafterweise ist dabei vorgesehen, dass bei einer die Leistungsreserven einer Arbeitsmaschine überschreitenden Regelungsanforderung die Leistungsreserven einer in ihren Leistungsgrenzen arbeitenden Arbeitsmaschine zur Unterstützung der anderen Arbeitsmaschine gemäß der vorgebbaren und veränderbaren Gewichtung eingesetzt wird.

Gemäß einer bevorzugten Verfahrensvariante ist vorgesehen, dass das Erreichen der Leistungsgrenzen der Antriebsmaschinen überwacht und vor Überschreiten dieser Leistungsgrenzen die Vorgabewerte für zumindest eine der Größen derart abgeändert werden, dass beide Antriebsmaschinen innerhalb der Leistungsgrenzen bleiben.

Natürlich kann auch auch vorgesehen sein, dass beide Vorgabewerte derart abgeändert werden, dass die Regeleinrichtung die verfügbare Stellleistung entsprechend der vorgegebenen Gewichtung aufteilt.

Vorteilhafterweise werden dabei zusätzlich zur Anpassung der Sollverläufe auch gleichzeitig die dazu nötigen Stellgrößen für eine exakte Folgeregelung dieser abgeänderten Verläufe automatisch berechnet.

Gemäß einer besonders vorteilhaften Variante der Erfindung ist weiters eine Anti-Wind-Up-Struktur, bei der die Rückführung der Differenz zwischen dem vom Regler ausgegebenen und dem erlaubten Wert verwendet wird, um die Stellleistung entsprechend der vorgebbare und veränderbare Gewichtung auf die Verbrennungskraftmaschine und die Antriebs- und/oder Belastungseinheit aufzuteilen.

In der nachfolgenden Beschreibung soll die Erfindung unter Bezugnahme auf die beigefügten Abbildungen näher erläutert werden.

Dabei zeigt die Fig. 1 zwei Diagramme für einen Arbeitspunktwechsel außerhalb der Leistungsgrenzen der Prüfstandsanordnung, Fig. 2 ist ein Diagramm zur Charakterisierung der Reglerperformance, und Fig. 3 ist eine schematische Darstellung einer Regelanordnung für einen Prüfstand mit Anti-Wind-Up-Struktur.

An einem Prüfstand ist zumindest eine Lastmaschine vorgesehen, meist eine durch einen Frequenzumrichter gespeiste Asynchronmaschine, welche mit dem Prüfling Verbrennungskraftmotor über eine elastische Welle gekoppelt ist. Eingangsgrößen sind antriebsseitig das Gaspedal und lastseitig das (positive oder negative) Lastmomentsollwert der elektrischen Maschine. Die Kombination beider daraus resultierenden Drehmomente stellt dann über die Trägheiten und Widerstände die effektive Drehzahl ein.

Am Prüfstand soll nun der Motor im gewünschten Arbeitspunkt betrieben werden, wobei dieser Arbeitspunkt in den allermeisten Fällen in einer Kombination aus Drehzahl und Motormoment ausgedrückt wird. Besonders wichtig ist dabei die Dynamik und Genauigkeit der Einstellung eines Arbeitspunktes. Ein Maß für diese Dynamik und Genauigkeit ist die Performance, welche als die reziproke mittlere quadratische Abweichung zwischen dem Referenzsignal und dem tatsächlich eingestellten Wert der Bezugsgröße, welche außerdem auf die Normperformance skaliert ist, definiert ist. Die Normperformance ist dabei die reziproke mittlere quadratische Abweichung zwischen dem Referenzsignal und dem tatsächlich eingestellten Wert der Bezugsgröße, welche mit der verwendeten Prüfstandskonfiguration erreichbar ist.

Für die Performance der Messung sind vor allem die Frequenzverteilung der nachzufahrenden Drehzahl- und Drehmomentreferenzen, die dynamischen Grenzen der Verbrennungskraftmaschine, die Beschränkungen der Prüfstandhardware, also vor allem der Bremsmaschine und der Übertragungswelle, sowie die Ausnützung dieser Grenzen, maßgeblich, wofür vor allem die Prüfstandsregelung verantwortlich ist. Da die Vorgaben für den Drehzahl- und Drehmomentverlauf frei gewählt werden können, ist es nicht immer unmittelbar klar, ob sie auch mit der gewünschten Genauigkeit mit dem konkreten Versuchsaufbau umsetzbar sind. Wichtig ist es aber, dass die Maschinen während der Versuche innerhalb der Performancegrenzen betrieben werden, andernfalls kann der Versuch irreführend sein, bzw. es kann den Anschein haben, dass die Prüfstandsregler nicht richtig funktionieren.

Wenn ein Arbeitspunkt in möglichst kurzer Zeit, also unter Ausnützung der Performancegrenzen beider Maschinen geändert werden soll, gibt es im Wesentlichen zwei Extreme. Es kann der Drehzahlverlauf exakt nachgebildet werden, wofür beide Maschinen in die gleiche Richtung mit maximalem Moment (d.h. an den Performancegrenzen) antreiben müssen, wodurch das Drehmoment nicht mehr geregelt werden kann. Oder es kann der Drehmomentverlauf genau nachgebildet werden, und das jeweilige Drehmoment kann sehr schnell durch eine Verdrehung der Welle eingestellt werden, was durch die Entwicklung der Drehzahldifferenz bestimmt wird. Damit sie richtig bleibt, müssen deshalb die Drehzahlen auf beiden Maschinen koordiniert ansteigen, wobei hier der langsamere Motor beschränkend wirkt.

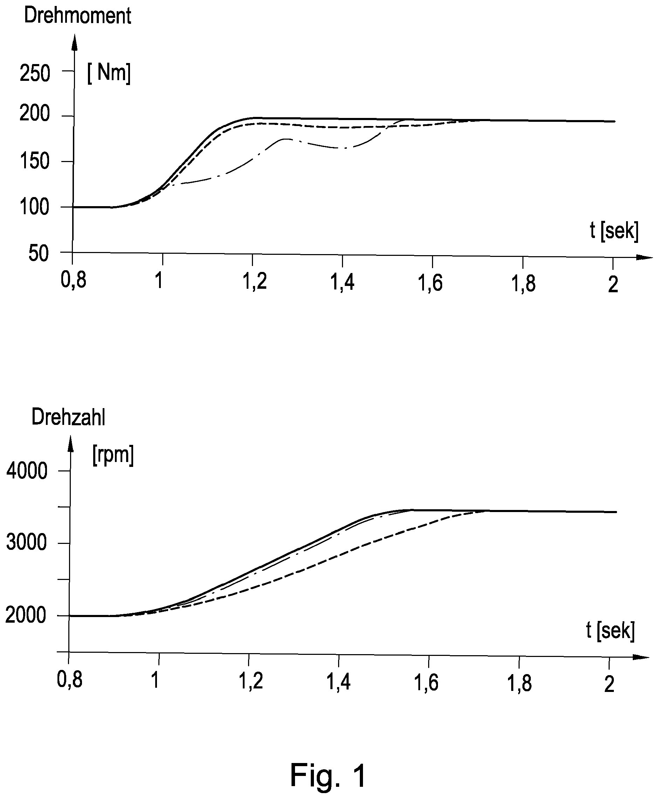

In Fig. 1 sind ein derartiger Arbeitspunktwechsel sowie die beiden Extremfälle dargestellt. Die durchgezogene Linie soll der gewünschte Verlauf sein, der allerdings nicht machbar ist, hauptsächlich weil der Motor zu langsam ist. Dadurch, dass der Motor in der Begrenzung ist, reduziert sich die Anzahl der Freiheitsgrade. Die schnellere Leistungsbremse, kann nun nicht beide Größen gleichzeitig ausregeln.

Mit einer Regeleinrichtung aber, die im Sinn einer Verstellung der Gewichtung von drehzahlgeführter Regelung auf drehmomentgeführter Regelung anpassbar ist, kann nun die Gewichtung zwischen beiden Größen geändert werden. Für eine drehzahlorientierte Regelung wird die Reserve der Leistungsbremse dazu verwendet, um der vorgegebenen Drehzahl so gut wie möglich zu folgen. Das geht dann zu Lasten des tatsächlichen Drehmomentverlaufs, wie die strich-punktierte Linie in Fig. 1 zeigt. In gleicher Weise kann aber auch die Reserve der Leistungsbremse dazu genutzt werden, um das Drehmoment so gut wie möglich zu regeln, was auf Kosten der Drehzahlreglung geht, wie der strichliert dargestellte Verlauf zeigt. Vorzugsweise ist die Gewichtung stufenlos einstellbar, könnte aber auch in fix vorgegebenen Stufen erfolgen, wofür die Regeleinrichtung mit einem Bedienelement zur Verstellung der Gewichtung ausgestattet ist. Dieses Bedienelement kann selbstverständlich auch über eine graphische Benutzeroberfläche realisiert, beispielsweise als Schieberegler dargestellt, sein, mit dem eine stufenlose Verstellung der Gewichtung von drehzahlgeführter Regelung auf drehmomentgeführter Regelung möglich ist. Zusätzlich zur Anpassung der Sollverläufe werden vorzugsweise auch gleichzeitig die dazu nötigen Stellgrößen für eine exakte Folgeregelung dieser abgeänderten Verläufe automatisch berechnet.

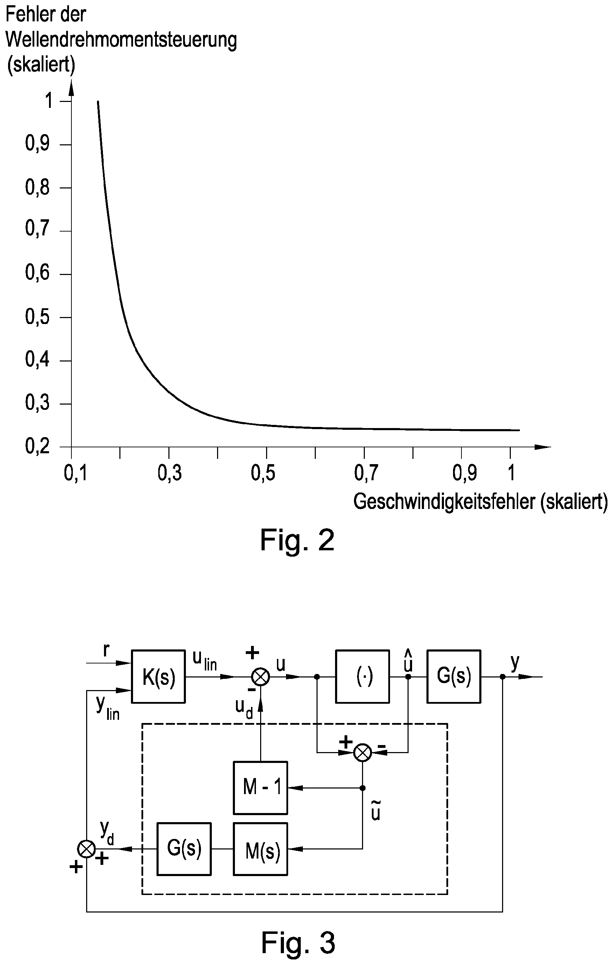

Die in Fig. 2 dargestellte Linie zeigt die bestenfalls erreichbare Reglerperformance für den in Fig. 1 gezeigten Arbeitspunktwechsel. Je nach Stellung des Bedienelementes für die Verstellung der Gewichtung wird man einen Punkt auf der grauen Linie erreichen können, d.h. man hat entweder einen kleinen Drehmomentenfehler, einen kleinen Drehzahlfehler oder einen Mischwert. Vorzugsweise werden die Performancegrenzen des Prüfstandes nach der Durchführung einer offline Identifikation automatisch berechnet.

Ein Feedbackteil sorgt bei der Regelung des Prüfstandes für die notwendige Robustheit und Stabilität, wobei dieser Feedbackteil vorzugsweise automatisch berechnet wird und mit der Gewichtung des Schiebereglers abgestimmt ist. Durch die oben erläuterten Stellgrößenbegrenzung beim Prüfstand kann es bei der Feedbackregelung zu einem "Wind Up" Effekt kommen, der sich durch überhöhtes Überschwingen oder auch durch eine hohe Schwingneigung des geschlossenen Regelkreises auswirkt und zu einem Verlust der Reglerperformance führt. Daher gibt es als Reglerergänzungen sogenannte Anti-Wind- Up Strukturen. Interne Kopplungsterme der Eingänge, z.B. Gaspedal bei der Verbrennungskraftmaschine und das Vorgabemoment bei der Leistungsbremse, führen dazu, dass ein Eingang beide Ausgänge des Systems, d.h. sowohl beispielsweise die Drehzahl der Verbrennungskraftmaschine oder der Leistungsbremse und das Drehmoment der Verbrennungskraftmaschine an der Kurbelwelle oder das Wellenmoment (Belastungsmoment) beeinflusst.

Diese Kopplung kann aber auch bei einer "Anti-Wind-Up" Regelung intelligent ausgenutzt werden. Eine mögliche "Anti-Wind-Up" Struktur ist in Fig. 3 schematisch dargestellt, wobei mit *û* die begrenzte Stellgröße bezeichnet ist. Ein wesentliches Merkmal dieser Struktur ist die Rückführung der Differenz zwischen dem vom Regler ausgegebenen und dem erlaubten Wert. Die genaue Ausführung des Teils innerhalb des strichlierten Rahmens ist nun wesentlich für das Verhalten des Regelkreises im Falle von Stellgrößenbeschränkungen.

Dieser Teil ist derart gestaltet, dass im Falle einer Beschränkung eines Eingangs, der andere dazu verwendet wird, um die Performance auch im beschränkten Fall entsprechend zu gewährleisten. Es besteht also die Möglichkeit, mit einem noch nicht beschränkten Eingang den anderen zu unterstützen. Nicht begrenzte Stellgrößen werden also dazu verwendet die Reglerperformance aufrecht zu halten. Auch dieser Vorgang kann stufenlos über einen Stellknopf oder softwaremäßig über ein GUI eingestellt werden. Durch die Beschränkung eines Eingangs kann es passieren, dass die Performance von einer Regelgröße zu einer anderen verlagert wird, was im ursprünglichen Regelkreis ohne Beschränkungen nicht erwünscht gewesen ist. Die Anti-Windup-Struktur soll es nun ermöglichen die zwar reduzierte Performance im beschränkten Fall gewichtungsmäßig zurück zur ursprünglichen Regelgröße zu verlagern. Vorzugsweise wird der dafür vorgesehene Algorithmus nach einer kurzen Identifikation automatisch berechnet und eingestellt.

Besonders vorteilhaft ist ein automatisch generiertes Warnsignal für den Prüfstandsoperator, wenn dieser Verläufe vorgibt, welche von der Prüfstandskonfiguration nicht umgesetzt werden können und somit möglicherweise nicht realistisch sind. Zusätzlich zum Warnsignal kann dabei auch eine Information angezeigt werden, welche Antriebsmaschine in der Begrenzung arbeitet.

## Patentansprüche

1. Prüfstand für dynamische Prüfaufgaben an Verbrennungskraftmaschinen, mit einer vorzugsweise elektrischen Antriebs- und/oder Belastungseinrichtung, die mit einer Regeleinrichtung für die Anpassung und Regelung von Vorgabewerten für eine Drehzahl und einen Drehmomentverlauf gekoppelt ist, **dadurch gekennzeichnet, dass** die Regeleinrichtung im Sinn einer Verstellung der Gewichtung von drehzahlgeführter Regelung auf drehmomentgeführter Regelung anpassbar ist.

2. Prüfstand nach Anspruch 1, **dadurch gekennzeichnet, dass** die Regeleinrichtung mit einem Bedienelement zur Verstellung der Gewichtung verbunden ist.

3. Prüfstand nach Anspruch 2, **dadurch gekennzeichnet, dass** das Bedienelement über eine graphische Benutzeroberfläche realisiert ist.

4. Prüfstand nach einem der Ansprüche 1 bis 3, **dadurch gekennzeichnet, dass** die Regeleinrichtung im Sinn einer stufenlosen Verstellung der Gewichtung anpassbar ist.

5. Verfahren zum Betreiben eines Prüfstandes mit zumindest einer Antriebs- und/oder Belastungseinheit für dynamische Prüfaufgaben an Verbrennungskraftmaschinen, bei welchem Vorgabewerte für den Verlauf zumindest zweier Größen der Verbrennungsmaschine, vorzugsweise einer Drehzahl und eines Drehmoments, über eine Antriebs- und/oder Belastungseinheit eingeregelt werden, **dadurch gekennzeichnet, dass** die Regeleinrichtung die verfügbare Stellleistung entsprechend einer vorgebbaren und veränderbaren Gewichtung auf die Verbrennungskraftmaschine und die Antriebs- und/oder Belastungseinheit aufteilt.

6. Verfahren nach Anspruch 5, **dadurch gekennzeichnet, dass** bei einer die Leistungsreserven einer Arbeitsmaschine überschreitenden Regelungsanforderung die Leistungsreserven einer in ihren Leistungsgrenzen arbeitenden Arbeitsmaschine zur Unterstützung der anderen Arbeitsmaschine gemäß der vorgebbaren und veränderbaren Gewichtung eingesetzt wird.

7. Verfahren nach Anspruch 5 oder 6, **dadurch gekennzeichnet, dass** das Erreichen der Leistungsgrenzen der Antriebsmaschinen überwacht und vor Überschreiten dieser Leistungsgrenzen die Vorgabewerte für zumindest eine der Größen derart abgeändert werden, dass beide Antriebsmaschinen innerhalb der Leistungsgrenzen bleiben.

8. Verfahren nach einem der Ansprüche 5 bis 7, **dadurch gekennzeichnet, dass** beide Vorgabewerte derart abgeändert werden, dass die Regeleinrichtung die verfügbare Stellleistung entsprechend der vorgegebenen Gewichtung aufteilt.

9. Verfahren nach einem der Ansprüche 7 oder 8, **dadurch gekennzeichnet, dass** zusätzlich zur Anpassung der Sollverläufe auch gleichzeitig die dazu nötigen Stellgrößen für eine exakte Folgeregelung dieser abgeänderten Verläufe automatisch berechnet werden.

10. Verfahren nach einem der Ansprüche 5 bis 9, **dadurch gekennzeichnet, dass** eine Anti-Wind-Up-Struktur vorgesehen ist, bei der die Rückführung der Differenz zwischen dem vom Regler ausgegebenen und dem erlaubten Wert verwendet wird, um die Stellleistung entsprechend der vorgebbare und veränderbare Gewichtung auf die Verbrennungskraftmaschine und die Antriebs- und/oder Belastungseinheit aufzuteilen.

## Claims

1. A test rig for dynamic test assignments on internal combustion engines having a preferably electrical drive and/or loading device which is coupled to a control device for adapting and controlling setpoint values for a speed and a torque characteristic, **characterized in that** the control device can be adapted in terms of adjusting the weighting of speed control to torque control.

2. The test rig as claimed in claim 1, **characterized in that** the control device is connected to a control element for adjusting the weighting.

3. The test rig as claimed in claim 2, **characterized in that** the control element is realized by means of a graphical user interface.

4. The test rig as claimed in one of claims 1 to 3, **characterized in that** the control device can be modified in terms of a stepless adjustment of the weighting.

5. A method for operating a test rig having at least one drive and/or loading unit for dynamic test assignments on internal combustion engines, with which setpoint values for the characteristic of a least two variables of the internal combustion engine, preferably a speed and a torque, are controlled by means of a drive and/or loading unit, **characterized in that** the control device divides the available control power between the internal combustion engine and the drive and/or loading unit in accordance with a specifiable and variable weighting.

6. The method as claimed in claim 5, **characterized in that**, in the event of a control demand which exceeds the power reserves of a machine, the power reserves of a machine which is working at its power limits are used to support the other machine in accordance with the specifiable and variable weighting.

7. The method as claimed in claim 5 or 6, **characterized in that** the reaching of the power limits of the machines is monitored and before these power limits are exceeded the setpoint values for at least one of the variables are modified in such a way that both machines remain within the power limits.

8. The method as claimed in one of claims 5 to 7, **characterized in that** both setpoint values are modified in such a way that the control device divides the available control power in accordance with the specified weighting.

9. The method as claimed in one of claims 7 or 8, **characterized in that**, in addition to adapting the desired characteristics, the manipulated variables which are necessary for an exact tracking of these modified characteristics are also automatically calculated at the same time.

10. The method as claimed in one of claims 5 to 9, **characterized in that** an anti-wind-up structure, with which the feedback of the difference between the value output by the controller and the permissible value is used to divide the control power between the internal combustion engine and the drive and/or loading unit in accordance with the specifiable and variable weighting, is provided.

## Revendications

1. Banc d'essai pour tâches de contrôle dynamiques sur moteurs à combustion interne, comportant un dispositif d'entraînement et/ou de charge de préférence électrique accouplé à un dispositif de régulation pour l'ajustement et la régulation de valeurs prédéfinies d'une courbe de vitesse de rotation et de couple, **caractérisé en ce que** le dispositif de régulation peut s'ajuster à la régulation commandée par couple dans le sens d'un réglage de la pondération de la régulation commandée par vitesse de rotation.

2. Banc d'essai selon la revendication 1, **caractérisé en ce que** le dispositif de régulation est relié à un élément de commande pour régler la pondération.

3. Banc d'essai selon la revendication 2, **caractérisé en ce que** l'élément de commande est réalisé par l'intermédiaire d'une interface utilisateur graphique.

4. Banc d'essai selon l'une des revendications 1 à 3, **caractérisé en ce que** le dispositif de régulation peut s'ajuster dans le sens d'un réglage continu de la pondération.

5. Procédé de fonctionnement d'un banc d'essai comportant au moins une unité d'entraînement et/ou de charge pour tâches de contrôle dynamiques sur moteurs à combustion interne, dans lequel les valeurs prédéfinies de la courbe d'au moins deux grandeurs du moteur à combustion interne, de préférence d'une vitesse de rotation et d'un couple, sont régulées par l'intermédiaire d'une unité d'entraînement et/ou de charge, **caractérisé en ce que** le dispositif de régulation répartit la puissance de réglage disponible en fonction d'une pondération prédéfinissable et variable entre le moteur à combustion interne et l'unité d'entraînement et/ou de charge.

6. Procédé selon la revendication 5, **caractérisé en ce que**, dans le cas d'une exigence de régulation dépassant les réserves de puissance d'une machine de travail, les réserves de puissance d'une machine de travail fonctionnant dans ses limites de puissance permettent de soutenir une autre machine de travail selon la pondération prédéfinissable et variable.

7. Procédé selon la revendication 5 ou 6, **caractérisé en ce que** l'atteinte des limites de puissance des machines d'entraînement est surveillée et, avant le dépassement de ces limites de puissance, les valeurs prédéfinies d'au moins l'une des grandeurs sont modifiées, de sorte que les deux machines d'entraînement demeurent dans les limites de puissance.

8. Procédé selon l'une des revendications 5 à 7, **caractérisé en ce que** les deux valeurs prédéfinies sont modifiées de telle manière que le dispositif de régulation répartit la puissance de réglage disponible en fonction de la pondération prédéfinie.

9. Procédé selon l'une des revendications 7 ou 8, **caractérisé en ce que**, en plus de l'ajustement des courbes de consigne, les grandeurs de réglage nécessaires sont calculées automatiquement en même temps pour un contrôle de suivi précis des courbes ainsi modifiées.

10. Procédé selon l'une des revendications 5 à 9, **caractérisé en ce qu'**une structure anti-retour est prévue, dans laquelle le retour de la différence entre la valeur délivrée par le régulateur et la valeur autorisée permet de répartir la puissance de réglage en fonction de la pondération prédéfinissable et variable entre le moteur à combustion interne et l'unité d'entraînement et/ou de charge.
